(19)

**Europäisches Patentamt**
**European Patent Office**
**Office européen des brevets**

(11) **EP 4 475 457 A1**

(12) **EUROPEAN PATENT APPLICATION**
published in accordance with Art. 153(4) EPC

(43) Date of publication:
**11.12.2024 Bulletin 2024/50**

(51) International Patent Classification (IPC):
***H04B 10/27*** (2013.01)

(21) Application number: **22924791.1**

(22) Date of filing: **03.02.2022**

(52) Cooperative Patent Classification (CPC):
**H04B 10/27**

(86) International application number:
**PCT/JP2022/004242**

(87) International publication number:
**WO 2023/148880 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
 • **Nippon Telegraph And Telephone Corporation
   Chiyoda-ku
   Tokyo 100-8116 (JP)**
 • **NTT DOCOMO, INC.
   Tokyo 100-6150 (JP)**

(72) Inventors:
 • **ITO Kota
   Musashino-shi, Tokyo 180-8585 (JP)**
 • **TAKAHASHI Yuta
   Musashino-shi, Tokyo 180-8585 (JP)**

 • **SUGA Mizuki
   Musashino-shi, Tokyo 180-8585 (JP)**
 • **ARAI Takuto
   Musashino-shi, Tokyo 180-8585 (JP)**
 • **SHIRATO Yushi
   Musashino-shi, Tokyo 180-8585 (JP)**
 • **UCHIDA Daisei
   Musashino-shi, Tokyo 180-8585 (JP)**
 • **TOSHINAGA Hideki
   Musashino-shi, Tokyo 180-8585 (JP)**
 • **KITA Naoki
   Musashino-shi, Tokyo 180-8585 (JP)**
 • **KISHIYAMA Yoshihisa
   Tokyo 100-6150 (JP)**
 • **SUYAMA Satoshi
   Tokyo 100-6150 (JP)**

(74) Representative: **Brevalex
   Tour Trinity
   1 B Place de la Défense
   92400 Courbevoie (FR)**

(54) **COMMUNICATION SYSTEM, DISPATCH STATION, COMMUNICATION METHOD, AND COMMUNICATION SYSTEM CREATION METHOD**

(57)     A communication system includes an aggregate station configured to transmit and receive a signal and N extension stations (N is an integer of 2 or more). The N extension stations include a first extension station configured to receive a signal from the aggregate station and transmit a signal to a second extension station, an $i^{th}$ extension station (i is an integer satisfying $2 \leq i \leq N-1$) configured to receive a signal from an $(i-1)^{th}$ extension station and transmit a signal to an $(i+1)^{th}$ extension station, and an $N^{th}$ extension station configured to receive a signal from an $(N-1)^{th}$ extension station. A ratio between a magnitude of a signal to be received by an $i^{th}$ extension station ($1 \leq i \leq N-1$) and a magnitude of a signal to be transmitted thereby is $(N-i+1):(N-i)$.

FIG. 3

EP 4 475 457 A1

## Description

[Technical Field]

The present invention relates to a communication system, an extension station, a communication method, and a communication system making method.

[Background Art]

Radio waves in a millimeter-wave band are attracting attention because the radio waves can be transmitted at high speeds. However, because radio waves in the millimeter-wave band have large propagation loss, it is necessary to install wireless base stations at high density.

As a method of installing a wireless base station, a method of applying analog radio-over-fiber (RoF) is disclosed in Non-Patent Document 1. Analog RoF is technology in which an optical signal is intensity-modulated with a radio signal and the intensity-modulated optical signal is transmitted through an optical fiber, and can extract an original radio signal by performing optical-to-electrical (O/E) conversion for the transmitted optical signal.

By applying analog RoF, wireless base stations can be separated into an aggregate station that performs signal processing and an extension station having an antenna function, and a signal processing function can be integrated into the aggregate station. Thereby, it is possible to simplify and more easily install the extension station.

Non-Patent Document 2 discloses that the aggregate station and the extension stations are connected according to a cascade configuration so that the extension stations are installed more easily. Each extension station branches an optical signal input from upstream equipment with an optical splitter, outputs a partial optical signal to downstream equipment, and locally processes the remaining optical signal.

[Citation List]

[Non-Patent Document]

[Non-Patent Document 1]
Kota Ito, Mizuki Suga, Yushi Shirato, Naoki Kita, and Takeshi Onizawa, Efficiently Accommodating High-frequency-band Wireless Systems by Using Analog Radio-over-fiber, NTT Technology Journal, 32(3), 15-17, 2020.
[Non-Patent Document 2]
E.-S. Kim, M. Sung, J. H. Lee, J. K. Lee, S.-H. Cho, and J. Kim, "Coverage Extension of Indoor 5G Network Using RoF-Based Distributed Antenna System," IEEE Access, vol. 8, pp. 194992-194999, 2020.

[Summary of Invention]

[Technical Problem]

All optical splitters provided in the extension stations of Non-Patent Document 2 basically have the same branching ratio. However, as the number of extension stations provided between the extension station and the aggregate station increases, a magnitude of an optical signal received by the extension station away from the aggregate station may decrease. Moreover, the magnitudes of the optical signals received by extension stations may be different.

The present invention provides a communication system, an extension station, a communication method, and a communication system making method for reducing a variation in a magnitude of an optical signal to be supplied to a plurality of extension stations.

[Solution to Problem]

According to an aspect of the present invention, there is provided a communication system including: an aggregate station configured to transmit and receive a signal; and N extension stations (N is an integer of 2 or more), wherein the N extension stations include a first extension station configured to receive a signal from the aggregate station and transmit a signal to a second extension station; an $i^{th}$ extension station (i is an integer satisfying $2 \leq i \leq N-1$) configured to receive a signal from an $(i-1)^{th}$ extension station and transmit a signal to an $(i+1)^{th}$ extension station; and an $N^{th}$ extension station configured to receive a signal from an $(N-1)^{th}$ extension station, wherein a ratio between a magnitude of a signal to be received by an $i^{th}$ extension station ($1 \leq i \leq N-1$) and a magnitude of a signal to be transmitted thereby is $(N-i+1):(N-i)$.

According to an aspect of the present invention, there is provided an extension station in an optical communication system having an aggregate station at a head and a plurality of extension stations connected in series, the extension station including: a splitter configured to branch a signal input from upstream equipment into a signal to be processed locally and a signal to be transmitted to an extension station connected to a downstream side, wherein, when the total number of extension stations connected to the downstream side is denoted by j, a ratio between a magnitude of a signal to be received by the splitter and a magnitude of a signal to be transmitted to downstream equipment is (j+1):j.

According to an aspect of the present invention, there is provided a communication method of an extension station in an optical communication system having an aggregate station at a head and a plurality of extension stations connected in series, the communication method including: a branching step of branching a signal input from upstream equipment transmitting the branched signal to an extension station connected to a downstream side, wherein, when the total number of extension stations connected to the downstream side is denoted by j, a ratio between a magnitude of a signal to be received in the branching step and a magnitude of the signal to be transmitted to the extension station connected to the downstream side is (j+1):j.

According to an aspect of the present invention, there is provided a communication system including: an aggregate station configured to transmit and receive a signal; and N extension stations (N is an integer of 2 or more), wherein the N extension stations include a first extension station configured to receive a signal from the aggregate station and transmit a signal to a second extension station; an $i^{th}$ extension station (i is an integer satisfying $2 \leq i \leq N-1$) configured to receive a signal from an $(i-1)^{th}$ extension station and transmit a signal to an $(i+1)^{th}$ extension station; and an $N^{th}$ extension station configured to receive a signal from an $(N-1)^{th}$ extension station, and wherein a ratio between a magnitude of a signal to be locally processed by an $i^{th}$ extension station ($1 \leq i \leq N-1$) and a magnitude of a signal to be transmitted thereby is 1 :(N-i).

According to an aspect of the present invention, there is provided an extension station in an optical communication system having an aggregate station at a head and a plurality of extension stations connected in series, the extension station including: a branching unit configured to branch a signal input from upstream equipment into a signal to be processed locally and a signal to be transmitted to downstream equipment, wherein, when the total number of extension stations connected to a downstream side is denoted by j, an intensity of the signal to be transmitted to the downstream equipment branched by the branching unit is j times an intensity of the signal to be processed locally.

According to an aspect of the present invention, there is provided a communication method of an extension station in an optical communication system having an aggregate station at a head and a plurality of extension stations connected in series, the communication method including: a branching step of branching a signal input from upstream equipment into a signal to be processed locally and a signal to be transmitted to an extension station connected to a downstream side, wherein, when the total number of extension stations connected to the downstream side is denoted by j, a magnitude of a signal to be transmitted to downstream equipment branched in the branching step is j times a magnitude of the signal to be processed locally.

According to an aspect of the present invention, there is provided a communication system making method of setting a ratio between a magnitude of a signal to be transmitted to an extension station and a magnitude of a signal to be processed locally, the communication system making method including steps of: installing an aggregate station; connecting N extension stations (N is an integer of 2 or more) in series with the aggregate station, wherein the extension station includes a branching unit configured to branch a received signal into a signal to be processed locally and a signal to be transmitted to another extension station; and setting a branching ratio of the branching unit of each of the N extension stations, wherein the step of setting the branching ratio includes setting the branching ratio of an $i^{th}$ extension station ($1 \leq i \leq N-1$) so that a ratio between an intensity of the signal to be transmitted and an intensity of the signal to be processed locally becomes j:1 when the total number of other extension stations connected to a downstream side of the $i^{th}$ extension station is denoted by j.

[Advantageous Effects of Invention]

According to the present invention, it is possible to reduce a variation in the magnitude of an optical signal to be supplied to each of a plurality of extension stations.

[Brief Description of Drawings]

FIG. 1 is a diagram showing a configuration of an optical communication system in which an aggregate station and an extension station are connected through a cascade configuration.
FIG. 2 is a diagram showing a configuration of the aggregate station.
FIG. 3 is a diagram showing a configuration of an $i^{th}$ extension station (i is an integer satisfying $1 \leq i \leq N$).

FIG. 4 is a flowchart showing a transmission method of the aggregate station.

FIG. 5 is a flowchart showing a reception method of the aggregate station.

FIG. 6 is a flowchart showing a communication method in which the extension station communicates with upstream equipment.

FIG. 7 is a flowchart showing a communication method in which the extension station communicates with downstream equipment.

FIG. 8 is a flowchart showing an optical communication system making method.

[Description of Embodiments]

<Optical communication system>

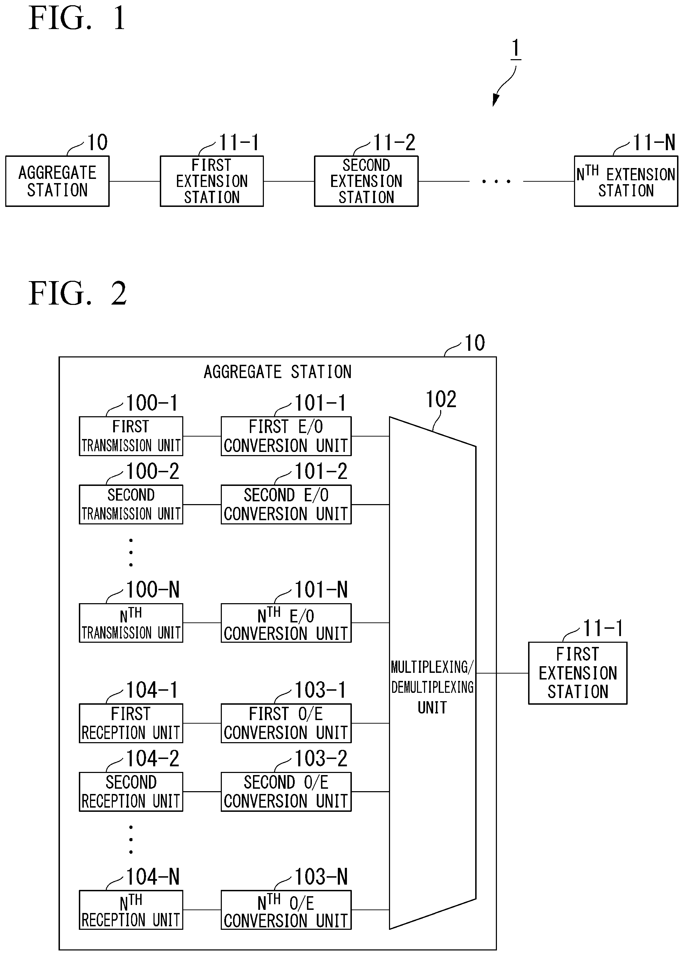

FIG. 1 is a diagram showing a configuration of an optical communication system 1 in which an aggregate station 10 and extension stations 11 are connected through a cascade configuration. The optical communication system 1 has one aggregate station 10 and N extension stations 11 (N is an integer of 2 or more). The optical communication system 1 has the aggregate station 10 at a head and the N extension stations 11 connected in series. Hereinafter, each extension station 11 is referred to as an $i^{th}$ extension station 11-i (i is an integer satisfying $1 \leq i \leq N$) when the N extension stations 11 are distinguished, but is simply referred to as an extension station 11 when features common to all $i^{th}$ extension stations 11-i are described. In addition, the ordinal number i is equal to the number of hops from the aggregate station 10. In the optical communication system 1, a direction from the aggregate station 10 to the extension station 11 is referred to as a downstream direction and a direction from the extension station 11 to the aggregate station 10 is referred to as an upstream direction.

The aggregate station 10 transmits a downlink optical signal generated by performing electrical-to-optical (E/O) conversion for a generated radio signal to the first extension station 11-1. The first extension station 11-1 branches the received downlink optical signal, transmits a partial optical signal to the second extension station 11-2, locally processes the remaining optical signal, and transmits a radio signal in accordance with the optical signal. The first extension station 11-1, for example, radiates a radio signal obtained by performing optical-to-electrical (O/E) conversion for an optical signal to a space via an antenna. Second to $(N-1)^{th}$ extension stations 11-2 to 11-(N-1) also perform operations similar to that of the first extension station 11-1. That is, the $i^{th}$ extension station 11-i (i is an integer satisfying $2 \leq i \leq N-1$) branches the optical signal received from an $(i-1)^{th}$ extension station 11-(i-1), which upstream equipment, and transmits a partial optical signal to an $(i+1)^{th}$ extension station 11-(i+1), which is downstream equipment.

The $i^{th}$ extension station 11-i (i is an integer satisfying $2 \leq i \leq N-1$), for example, generates an uplink optical signal by performing E/O conversion for a radio signal received via an antenna. The $i^{th}$ extension station 11-i merges an optical signal received from the downstream equipment and an uplink optical signal and transmits a merging result to the upstream equipment. That is, the $i^{th}$ extension station 11-i merges the optical signal received from the $(i+1)^{th}$ extension station 11-(i+1) and an optical signal obtained by multiplexing locally received radio signals and transmits an optical signal obtained in the merging process to the $(i-1)^{th}$ extension station 11-(i-1).

That is, the optical signal transmitted from the aggregate station 10 descends to the first extension station 11-1 and the second extension station 11-2 and finally reaches the $N^{th}$ extension station 11-N. Moreover, the optical signal transmitted from the $N^{h}$ extension station 11-N ascends to the $(N-1)^{th}$ extension station 11-(N-1) and finally reaches the aggregate station 10. The aggregate station 10 performs O/E conversion for the optical signal arriving thereat and acquires a radio signal. The radio signal, for example, is subjected to signal processing.

As described above, in the optical communication system 1, the aggregate station 10 is located at the head and the N extension stations 11 are connected in series. A radio signal received in the extension station 11 is converted into an optical signal without signal processing in the extension station 11 and aggregated in the aggregate station 10. The optical signal aggregated in the aggregate station 10 is converted into a radio signal and the radio signal received by the extension station 11 is extracted. Because the extension station 11 does not need to include a configuration in which signal processing of a radio signal is performed, the extension station 11 can be easily implemented.

<Aggregate station>

FIG. 2 is a diagram showing a configuration of the aggregate station 10. The aggregate station 10 includes a transmission unit 100, an E/O conversion unit 101, a multiplexing/demultiplexing unit 102, an O/E conversion unit 103, and a reception unit 104. The aggregate station 10 includes N transmission units 100, N E/O conversion units 101, N O/E conversion units 103, and N reception units 104, wherein N is the same as the number of extension stations 11.

The transmission units 100 are referred to as a first transmission unit 100-1, a second transmission unit 100-2, ..., and an $N^{th}$ transmission unit 100-N. The E/O conversion units 101 are referred to as a first E/O conversion unit 101-1, a second E/O conversion unit 101-2, ..., and an $N^{th}$ E/O conversion unit 101-N. The O/E conversion units 103 are referred to as a first O/E conversion unit 103-1, a second O/E conversion unit 103-2, ..., and an $N^{th}$ O/E conversion unit 103-N. The reception units 104 are referred to as a first reception unit 104-1, a second reception unit 104-2, ..., and an $N^{th}$ reception unit 104-N.

An $i^{th}$ transmission unit 100-i (i is an integer satisfying $1 \leq i \leq N$) transmits an electrical signal to an $i^{th}$ E/O conversion unit 101-i. The $i^{th}$ E/O conversion unit 101-i (i is an integer satisfying $1 \leq i \leq N$) converts the received electrical signal into an optical signal and transmits the optical signal to the multiplexing/demultiplexing unit 102. The wavelengths of the optical signals transmitted to the multiplexing/demultiplexing unit 102 by the $i^{th}$ E/O conversion unit 101-i are different. The wavelength of the optical signal transmitted by the $i^{th}$ E/O conversion unit 101-i is denoted by $\lambda_{DLi}$ and differs according to each E/O conversion unit 101. The optical signal transmitted by the $i^{th}$ E/O conversion unit 101-i is intended to finally reach the $i^{th}$ extension station 11-i. The aggregate station 10 can switch the transmission unit 100 from which the electrical signal is transmitted, thereby switching the extension station 11 at which the transmitted optical signal finally arrives. Thereby, the aggregate station 10 can perform a handover or switch between whether or not to cause the extension station 11 to transmit/receive a signal.

The multiplexing/demultiplexing unit 102 multiplexes optical signals received from the E/O conversion units 101 and transmits a multiplexing result to the first extension station 11-1. Moreover, the multiplexing/demultiplexing unit 102 demultiplexes an optical signal received from the first extension station 11-1 and transmits the demultiplexed optical signal to the O/E conversion units 103. A wavelength of the optical signal transmitted by the multiplexing/demultiplexing unit 102 to the $i^{th}$ O/E conversion unit 103-i is denoted by $\lambda_{ULi}$ and differs for each O/E conversion unit 103. The optical signal having the wavelength $\lambda_{ULi}$ is an optical signal transmitted from the $i^{th}$ extension station 11-i.

The $i^{th}$ O/E conversion unit 103-i (i is an integer satisfying $1 \leq i \leq N$) converts the received optical signal into an electrical signal and transmits the electrical signal to the $i^{th}$ reception unit 104-i. The $i^{th}$ reception unit 104-i (i is an integer satisfying $1 \leq i \leq N$) receives the electrical signal from the $i^{th}$ O/E conversion unit 103-i.

<Extension station>

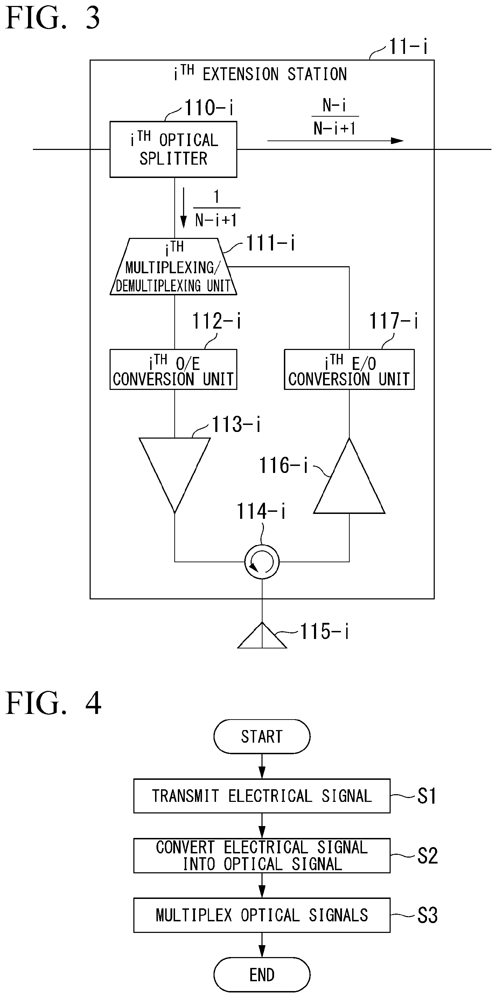

FIG. 3 is a diagram showing a configuration of the $i^{th}$ extension station 11-i (i is an integer satisfying $1 \leq i \leq N$). The $i^{th}$ extension station 11-i includes an $i^{th}$ optical splitter 110-i, an $i^{th}$ multiplexing/demultiplexing unit 111-i, an $i^{th}$ O/E conversion unit 112-i, an $i^{th}$ transmission amplifier 113-i, an $i^{th}$ circulator 114-i, an $i^{th}$ antenna 115-i, an $i^{th}$ reception amplifier 116-i, and an $i^{th}$ E/O conversion unit 117-i. Like the $i^{th}$ extension station 11-i, the $i^{th}$ optical splitter 110-i, the $i^{th}$ multiplexing/demultiplexing unit 111-i, the $i^{th}$ O/E conversion unit 112-i, the $i^{th}$ transmission amplifier 113-i, the $i^{th}$ circulator 114-i, the $i^{th}$ antenna 115-i, the $i^{th}$ reception amplifier 116-i, and the $i^{th}$ E/O conversion unit 117-i are referred to as the optical splitter 110, the multiplexing/demultiplexing unit 111, the O/E conversion unit 112, the transmission amplifier 113, the circulator 114, the antenna 115, the reception amplifier 116, and the E/O conversion unit 117, respectively, when a feature not depending upon the position of the extension station 11 is described.

The $i^{th}$ optical splitter 110-i branches the optical signal received from the upstream equipment and transmits the branched optical signal to the $i^{th}$ multiplexing/demultiplexing unit 111-i and the $(i+1)^{th}$ extension station 11-(i+1). The first optical splitter 110-1 branches the optical signal received from the aggregate station 10 and the $i^{th}$ optical splitter 110-i (i is an integer satisfying $2 \leq i \leq N-1$) branches the optical signal received from the $(i-1)^{th}$ extension station 11-(i-1).

The $i^{th}$ optical splitter 110-i merges the optical signals transmitted from the $i^{th}$ multiplexing/demultiplexing unit 111-i and the $(i+1)^{th}$ extension station 11-(i+1), which is the downstream equipment, and transmits an optical signal obtained in the merging process to the upstream equipment. The first optical splitter 110-1 transmits an optical signal obtained in the merging process to the aggregate station 10 and the $i^{th}$ optical splitter 110-i (i is an integer satisfying $2 \leq i \leq N-1$) transmits the optical signal obtained in the merging process to the $(i-1)^{th}$ extension station 11-(i-1).

The $i^{th}$ multiplexing/demultiplexing unit 111-i includes, for example, an optical multiplexing/demultiplexing unit. The $i^{th}$ multiplexing/demultiplexing unit 111-i demultiplexes the optical signal received from the $i^{th}$ optical splitter 110-i, extracts a signal having a wavelength $\lambda_{DLi}$, and outputs the signal to the $i^{th}$ O/E conversion unit 112-i. Thereby, the $i^{th}$ multiplexing/demultiplexing unit 111-i can extract an optical signal corresponding to its own station from among optical signals transmitted from the $i^{th}$ E/O conversion unit 101-i. The $i^{th}$ multiplexing/demultiplexing unit 111-i transmits an optical signal having a wavelength $\lambda_{ULi}$ among the optical signals received from the $i^{th}$ E/O conversion unit 117-i to the $i^{th}$ optical splitter 110-i. The wavelength of the optical signal received from the $i^{th}$ E/O conversion unit 117-i is denoted by $\lambda_{ULi}$. That is, the optical signal transmitted from the $i^{th}$ E/O conversion unit 117-i is finally received by the $i^{th}$ reception unit 104-i.

The $i^{th}$ O/E conversion unit 112-i converts the optical signal received from the $i^{th}$ multiplexing/demultiplexing unit 111-i into an electrical signal and transmits the electrical signal to the $i^{th}$ transmission amplifier 113-i. The $i^{th}$ transmission amplifier 113-i amplifies the electrical signal received from the $i^{th}$ O/E conversion unit 112-i and transmits the amplified electrical signal to the $i^{th}$ circulator 114-i.

The $i^{th}$ circulator 114-i transmits an electrical signal received from the $i^{th}$ transmission amplifier 113-i to the $i^{th}$ antenna 115-i. Moreover, the $i^{th}$ circulator 114-i transmits the electrical signal received from the $i^{th}$ antenna 115-i to the $i^{th}$ reception amplifier 116-i.

The $i^{th}$ antenna 115-i radiates an electrical signal received from the $i^{th}$ circulator 114-i to a space. Moreover, the $i^{th}$ antenna 115-i transmits the received electrical signal to the $i^{th}$ circulator 114-i.

The $i^{th}$ reception amplifier 116-i amplifies the electrical signal received from the $i^{th}$ circulator 114-i and transmits the amplified electrical signal to the $i^{th}$ E/O conversion unit 117-i. The $i^{th}$ E/O conversion unit 117-i converts an electrical signal received from the $i^{th}$ reception amplifier 116-i into an optical signal having a wavelength $\lambda_{ULi}$ and transmits the optical signal to the $i^{th}$ multiplexing/demultiplexing unit 111-i.

The $N^{th}$ extension station 11-N has substantially the same configuration as the $i^{th}$ extension station 11-i (i is an integer satisfying $1 \leq i \leq N-1$), but may not include an optical splitter.

FIG. 4 is a flowchart showing a transmission method of the aggregate station 10. The transmission unit 100 transmits an electrical signal to the E/O conversion unit 101 (step S1). The E/O conversion unit 101 converts the electrical signal into an optical signal (step S2). The multiplexing/demultiplexing unit 102 multiplexes optical signals (step S3). An optical signal obtained in the multiplexing process is transmitted to the first extension station 11-1.

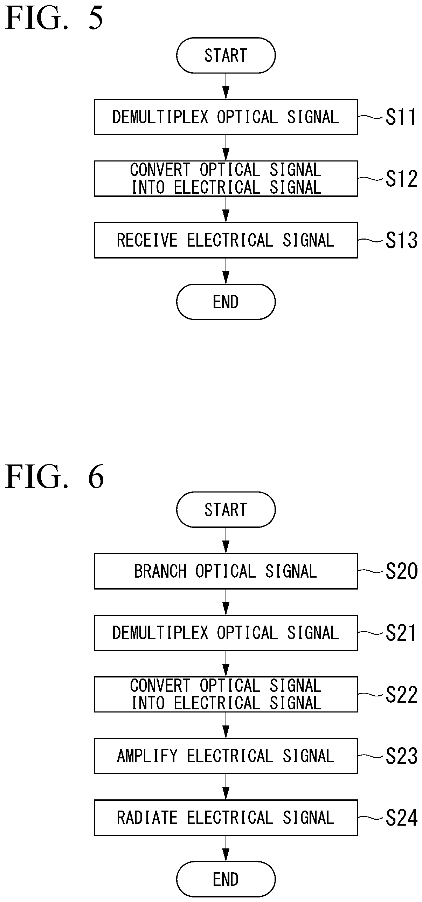

FIG. 5 is a flowchart showing a reception method of the aggregate station 10. The multiplexing/demultiplexing unit 102 demultiplexes an optical signal received from the first extension station 11-1 (step S11). The O/E conversion unit 103 converts the optical signal into an electrical signal (step S12). The reception unit 104 receives the electrical signal (step S13).

FIG. 6 is a flowchart showing a communication method in which the extension station 11 communicates with upstream equipment. The optical splitter 110 branches an optical signal received from the upstream equipment (step S20). The branched optical signal is transmitted to the multiplexing/demultiplexing unit 111 and downstream equipment. The multiplexing/demultiplexing unit 111 branches the optical signal received from the optical splitter 110 (step S21). The O/E conversion unit 112 converts the optical signal into an electrical signal (step S22). The transmission amplifier 113 amplifies the electrical signal (step S23). The electrical signal is emitted from the antenna 115 via the circulator 114 (step S24).

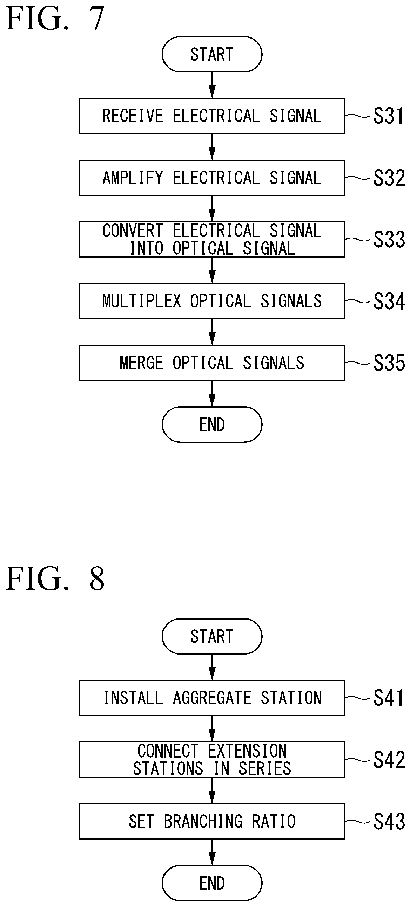

FIG. 7 is a flowchart showing a communication method in which the extension station 11 communicates with downstream equipment. The antenna 115 receives an electrical signal (step S31). The electrical signal is amplified by the reception amplifier 116 via the circulator 114 (step S32). The E/O conversion unit 117 converts the electrical signal into an optical signal (step S33). The multiplexing/demultiplexing unit 111 multiplexes optical signals (step S34). The optical splitter 110 merges the optical signal received from the multiplexing/demultiplexing unit 111 and the optical signal received from the downstream equipment and transmits a merging result to the upstream equipment (step S35).

<Branching ratio of optical splitter>

The $i^{th}$ optical splitter 110-i branches the received optical signal so that a magnitude ratio becomes 1:(N-i). The $i^{th}$ optical splitter 110-i transmits optical signals obtained in the branching process to the $i^{th}$ multiplexing/demultiplexing unit 111-i and the $(i+1)^{th}$ extension station 11-(i+1) so that a ratio between a magnitude of the optical signal transmitted to the $i^{th}$ multiplexing/demultiplexing unit 111-i and a magnitude of the optical signal transmitted to the $(i+1)^{th}$ extension station 11-(i+1) becomes 1:(N-i). The first optical splitter 110-1 branches the optical signal received from the aggregate station 10 and the $i^{th}$ optical splitter 110-i (i is an integer satisfying $2 \leq i \leq N-1$) branches the optical signal received from the $(i-1)^{th}$ extension station 11-(i-1).

The branching ratio of the $i^{th}$ optical splitter 110-i is set, for example, at the time of installation of the $i^{th}$ extension station 11-i, but the present invention is not limited thereto. For example, the $i^{th}$ optical splitter 110-i includes two optically coupled optical fibers, an actuator configured to change a distance between cores of the optical fibers, and a control apparatus configured to control the actuator on the basis of a control signal, wherein the branching ratio of the $i^{th}$ optical splitter 110-i may be set on the basis of the control signal transmitted from other equipment such as the aggregate station 10.

The $i^{th}$ optical splitter 110-i merges the optical signals transmitted from the $i^{th}$ multiplexing/demultiplexing unit 111-i and the $(i+1)^{th}$ extension station 11-(i+1) and transmits an optical signal obtained in the merging process. The first optical splitter 110-1 transmits the optical signal obtained in the merging process to the aggregate station 10, and the $i^{th}$ optical splitter 110-i (i is an integer satisfying $2 \leq i \leq N-1$) transmits the optical signal obtained in the merging process to the $(i-1)^{th}$ extension station 11-(i-1).

The optical signal transmitted to the $i^{th}$ multiplexing/demultiplexing unit 111-i by the $i^{th}$ optical splitter 110-i is an optical signal remaining in the $i^{th}$ extension station 11-i including the $i^{th}$ optical splitter 110-i. The ratio between the magnitude of the optical signal input to the $i^{th}$ extension station 11-i and the magnitude of the output optical signal is (N-i+1):(N-i). A magnitude $P_i$ of the optical signal received by the $i^{th}$ extension station 11-i is expressed by Eq. (1) using a magnitude $P_0$ of the optical signal transmitted from the aggregate station 10.

[Math. 1]

$$P_i = \begin{cases} \dfrac{P_0}{N} \ (i = 1) \\[4mm] P_0 \dfrac{1}{N-i+1} \displaystyle\prod_{k=1}^{i-1} \dfrac{N-k}{N-k+1} = \dfrac{P_0}{N} \ (2 \le i \le N-1) \end{cases} \cdots (1)$$

Moreover, a magnitude of the optical signal transmitted by the (N-1)<sup>th</sup> extension station 11-(N-1), i.e., a magnitude $P_N$ of the optical signal received by the N<sup>th</sup> extension station 11-N, is expressed by Eq. (2).
[Math. 2]

$$P_N = P_0 \prod_{k=1}^{N-1} \frac{N-k}{N-k+1} = \frac{P_0}{N} \cdots (2)$$

From the above, differences between optical signals to be received by the extension stations 11 and optical signals to be transmitted thereby, i.e., magnitudes of the optical signals input to the O/E conversion units 112 of the extension stations 11, are all equal.

In the optical communication system 1, the i<sup>th</sup> extension station 11-i performs a branching process so that a ratio of the magnitudes of the received optical signals is 1:(N-i) and transmits an optical signal to the (i+1)<sup>th</sup> extension station 11-(i+1) so that a ratio between the magnitude of the received optical signal and the magnitude of the optical signal transmitted to the (i+1)<sup>th</sup> extension station 11-(i+1) becomes (N-i+1):(N-i). Thereby, the magnitudes of the optical signals that are received by the extension stations 11 but are not transmitted thereby, can all be equal.

FIG. 8 is a flowchart showing a method of making the optical communication system 1. First, the aggregate station 10 is installed (step S41). Thereafter, N extension stations 11, each of which includes the optical splitter 110 that branches a received signal into a signal to be processed locally and a signal to be transmitted to another extension station, are connected in series with the aggregate station 10 (step S42). The branching ratio of the optical splitter 110 for each of the N extension stations 11 is set (step S43).

In a process of setting the branching ratio, the branching ratio of the i<sup>th</sup> extension station 11-i $(1 \le i \le N-1)$ is set so that the ratio between the magnitude of the signal to be transmitted and the magnitude of the signal to be processed locally is j: 1 when the total number of other extension stations connected to a downstream side of the i<sup>th</sup> extension station 11-i is denoted by j.

<Other embodiments>

Although embodiments of the present invention have been described above in detail with reference to the drawings, specific configurations are not limited to the embodiments and other designs and the like may also be included without departing from the spirit and scope of the present invention.

In the optical communication system 1 according to the above-described embodiment, an array of the plurality of extension stations 11 having a cascade connection does not branch in the middle, but the array of the extension stations 11 may branch in the middle in other embodiments. That is, two or more extension stations 11 may be connected to the downward side of a certain extension station 11. At this time, a branching process is performed at the branching ratio of the extension station 11 as a ratio of the number of extension stations 11 constituting the array of the extension stations connected to the downlink side. Moreover, in the optical splitter of the extension station in the downlink direction after branching, a ratio between a magnitude of the optical signal input to a j<sup>th</sup> extension station (j is an integer satisfying $1 \le j \le M$) and a magnitude of the output optical signal is (M-j+1):(M-j) when the number of extension stations in the downlink direction after branching is denoted by M and a distance from a branch point is shorter in the order of the first extension station, the second extension station, and the like.

An optical signal multiplexing/demultiplexing method in the multiplexing/demultiplexing unit 102 and the multiplexing/demultiplexing unit 111 is not particularly limited. For example, the multiplexing/demultiplexing unit 102 and the multiplexing/demultiplexing unit 111 may multiplex/demultiplex optical signals according to frequency division multiplexing/demultiplexing or multiplex/demultiplex optical signals according to time division multiplexing/demultiplexing.

The extension station 11 may include a control unit 118. When the multiplexing/demultiplexing unit 111 multiplexes and demultiplexes the optical signals according to time division multiplexing/demultiplexing, the circulator 114 may be a time division duplexing (TDD) switch and the control unit 118 may control the TDD switch to switch a connection of the transmission amplifier 113 and the circulator 114 and a connection of the circulator 114 and the reception amplifier 116. When the multiplexing/demultiplexing unit 111 multiplexes and demultiplexes optical signals according to time division multiplexing/demultiplexing, the wavelength $\lambda_{DLi}$ of the optical signal transmitted by the $i^{th}$ E/O conversion unit 101-i and the wavelength $\lambda_{ULi}$ of the optical signal received by the $i^{th}$ O/E conversion unit 103-i may be the same wavelength. For example, $\lambda_{DL1}$ and $\lambda_{UL1}$ may be the same wavelength.

The antenna 115 may be an array antenna controllable in a beam direction and the control unit 118 may control the antenna 115 to change the beam direction in which the antenna 115 performs transmission and reception.

The control unit 118 may be controlled on the basis of a control signal received from the aggregate station 10. The control signal may be multiplexed into a downlink optical signal to be transmitted by the aggregate station 10 according to subcarrier multiplexing, polarization multiplexing, or wavelength multiplexing and transmitted to the extension station 11. The wavelength of the control signal may be a wavelength different from either $\lambda_{DLi}$ or $\lambda_{ULi}$. At this time, a circulator or the like may be provided between the multiplexing/demultiplexing unit 111 and the E/O conversion unit 117 so that a control signal is prevented from being input from the multiplexing/demultiplexing unit 111 to the E/O conversion unit 117.

The optical communication system 1 employs analog radio-over-fiber (RoF) and the present invention is not limited thereto. The optical communication system 1 may employ digital RoF (for example, a common public radio interface (CPRI) or enhanced common public radio interface (eCPRI)) or digital coherent transmission, the aggregate station 10 may include an A/D converter, each extension station 11 includes a digital-to-analog (D/A) converter, and the aggregate station 10 may transmit a digital signal.

The present invention can be applied even if the aggregate station 10 and the extension station are connected by a mobile fronthaul in the optical communication system 1.

[Reference Signs List]

10 Aggregate station
11 Extension station
100 Transmission unit
101 E/O conversion unit
102 Multiplexing/demultiplexing unit
103 O/E conversion unit
104 Reception unit
110 Optical splitter
111 Multiplexing/demultiplexing unit
112 O/E conversion unit
113 Transmission amplifier
114 Circulator
115 Antenna
116 Reception amplifier
117 E/O conversion unit

**Claims**

1. A communication system comprising:

an aggregate station configured to transmit and receive a signal; and
N extension stations (N is an integer of 2 or more),
wherein the N extension stations include

a first extension station configured to receive a signal from the aggregate station and transmit a signal to a second extension station;
an $i^{th}$ extension station (i is an integer satisfying $2 \leq i \leq N-1$) configured to receive a signal from an $(i-1)^{th}$ extension station and transmit a signal to an $(i+1)^{th}$ extension station; and
an $N^{h}$ extension station configured to receive a signal from an $(N-1)^{th}$ extension station,
wherein a ratio between a magnitude of a signal to be received by an $i^{th}$ extension station ($1 \leq i \leq N-1$) and a magnitude of a signal to be transmitted thereby is (N-i+1):(N-i).

2. An extension station in an optical communication system having an aggregate station at a head and a plurality of extension stations connected in series, the extension station comprising:

a splitter configured to branch a signal input from upstream equipment into a signal to be processed locally and a signal to be transmitted to an extension station connected to a downstream side,

wherein, when the total number of extension stations connected to the downstream side is denoted by j, a ratio between a magnitude of a signal to be received by the splitter and a magnitude of a signal to be transmitted to downstream equipment is (j+1):j.

3. A communication method of an extension station in an optical communication system having an aggregate station at a head and a plurality of extension stations connected in series, the communication method comprising:

a branching step of branching a signal input from upstream equipment and transmitting the branched signal to an extension station connected to a downstream side,

wherein, when the total number of extension stations connected to the downstream side is denoted by j, a ratio between a magnitude of a signal to be received in the branching step and a magnitude of the signal to be transmitted to the extension station connected to the downstream side is (j+1):j.

4. A communication system comprising:

an aggregate station configured to transmit and receive a signal; and
N extension stations (N is an integer of 2 or more),
wherein the N extension stations include

a first extension station configured to receive a signal from the aggregate station and transmit a signal to a second extension station;
an $i^{th}$ extension station (i is an integer satisfying $2 \leq i \leq N-1$) configured to receive a signal from an $(i-1)^{th}$ extension station and transmit a signal to an $(i+1)^{th}$ extension station; and
an $N^{h}$ extension station configured to receive a signal from an $(N-1)^{th}$ extension station, and
wherein a ratio between a magnitude of a signal to be locally processed by an $i^{th}$ extension station ($1 \leq i \leq N-1$) and a magnitude of a signal to be transmitted thereby is 1:(N-i).

5. An extension station in an optical communication system having an aggregate station at a head and a plurality of extension stations connected in series, the extension station comprising:

a branching unit configured to branch a signal input from upstream equipment into a signal to be processed locally and a signal to be transmitted to downstream equipment,

wherein, when the total number of extension stations connected to a downstream side is denoted by j, an intensity of the signal to be transmitted to the downstream equipment branched by the branching unit is j times an intensity of the signal to be processed locally.

6. A communication method of an extension station in an optical communication system having an aggregate station at a head and a plurality of extension stations connected in series, the communication method comprising:

a branching step of branching a signal input from upstream equipment into a signal to be processed locally and a signal to be transmitted to an extension station connected to a downstream side,

wherein, when the total number of extension stations connected to the downstream side is denoted by j, a magnitude of a signal to be transmitted to downstream equipment branched in the branching step is j times a magnitude of the signal to be processed locally.

7. A communication system making method of setting a ratio between a magnitude of a signal to be transmitted to an extension station and a magnitude of a signal to be processed locally, the communication system making method comprising steps of:

installing an aggregate station;
connecting N extension stations (N is an integer of 2 or more) in series with the aggregate station, wherein the extension station includes a branching unit configured to branch a received signal into a signal to be processed locally and a signal to be transmitted to another extension station; and

setting a branching ratio of the branching unit of each of the N extension stations,
wherein the step of setting the branching ratio includes setting the branching ratio of an $i^{th}$ extension station ($1 \leq i \leq$ N-1) so that a ratio between the magnitude of the signal to be transmitted and the magnitude of the signal to be processed locally becomes j: 1 when the total number of other extension stations connected to a downstream side of the $i^{th}$ extension station is denoted by j.

# FIG. 1

# FIG. 2

# FIG. 3

11-i

iᵀᴴ EXTENSION STATION

110-i

iᵀᴴ OPTICAL SPLITTER

$\dfrac{N-i}{N-i+1}$

$\dfrac{1}{N-i+1}$

111-i

iᵀᴴ MULTIPLEXING/ DEMULTIPLEXING UNIT

112-i

iᵀᴴ O/E CONVERSION UNIT

117-i

iᵀᴴ E/O CONVERSION UNIT

113-i

116-i

114-i

115-i

# FIG. 4

START

TRANSMIT ELECTRICAL SIGNAL — S1

CONVERT ELECTRICAL SIGNAL INTO OPTICAL SIGNAL — S2

MULTIPLEX OPTICAL SIGNALS — S3

END

# FIG. 5

```
          ┌─────────┐
          │  START  │
          └─────────┘
               │
               ▼
┌──────────────────────────────┐
│  DEMULTIPLEX OPTICAL SIGNAL   │──S11
└──────────────────────────────┘
               │
               ▼
┌──────────────────────────────┐
│     CONVERT OPTICAL SIGNAL    │──S12
│     INTO ELECTRICAL SIGNAL    │
└──────────────────────────────┘
               │
               ▼
┌──────────────────────────────┐
│    RECEIVE ELECTRICAL SIGNAL  │──S13
└──────────────────────────────┘
               │
               ▼
          ┌─────────┐
          │   END   │
          └─────────┘
```

# FIG. 6

```
          ┌─────────┐
          │  START  │
          └─────────┘
               │
               ▼
┌──────────────────────────────┐
│     BRANCH OPTICAL SIGNAL     │──S20
└──────────────────────────────┘
               │
               ▼
┌──────────────────────────────┐
│   DEMULTIPLEX OPTICAL SIGNAL  │──S21
└──────────────────────────────┘
               │
               ▼
┌──────────────────────────────┐
│     CONVERT OPTICAL SIGNAL    │──S22
│     INTO ELECTRICAL SIGNAL    │
└──────────────────────────────┘
               │
               ▼
┌──────────────────────────────┐
│    AMPLIFY ELECTRICAL SIGNAL  │──S23
└──────────────────────────────┘
               │
               ▼
┌──────────────────────────────┐
│    RADIATE ELECTRICAL SIGNAL  │──S24
└──────────────────────────────┘
               │
               ▼
          ┌─────────┐
          │   END   │
          └─────────┘
```

FIG. 7

```
                    ┌─────────────┐
                    │    START    │
                    └─────────────┘
                           │
                           ▼
          ┌──────────────────────────────┐
          │   RECEIVE ELECTRICAL SIGNAL   │──── S31
          └──────────────────────────────┘
                           │
                           ▼
          ┌──────────────────────────────┐
          │   AMPLIFY ELECTRICAL SIGNAL   │──── S32
          └──────────────────────────────┘
                           │
                           ▼
          ┌──────────────────────────────┐
          │   CONVERT ELECTRICAL SIGNAL   │──── S33
          │       INTO OPTICAL SIGNAL     │
          └──────────────────────────────┘
                           │
                           ▼
          ┌──────────────────────────────┐
          │   MULTIPLEX OPTICAL SIGNALS   │──── S34
          └──────────────────────────────┘
                           │
                           ▼
          ┌──────────────────────────────┐
          │     MERGE OPTICAL SIGNALS     │──── S35
          └──────────────────────────────┘
                           │
                           ▼
                    ┌─────────────┐
                    │     END     │
                    └─────────────┘
```

FIG. 8

```
                    ┌─────────────┐
                    │    START    │
                    └─────────────┘
                           │
                           ▼
          ┌──────────────────────────────┐
          │   INSTALL AGGREGATE STATION   │──── S41
          └──────────────────────────────┘
                           │
                           ▼
          ┌──────────────────────────────┐
          │      CONNECT EXTENSION        │──── S42
          │      STATIONS IN SERIES       │
          └──────────────────────────────┘
                           │
                           ▼
          ┌──────────────────────────────┐
          │      SET BRANCHING RATIO      │──── S43
          └──────────────────────────────┘
                           │
                           ▼
                    ┌─────────────┐
                    │     END     │
                    └─────────────┘
```

## INTERNATIONAL SEARCH REPORT

International application No.

**PCT/JP2022/004242**

| A. CLASSIFICATION OF SUBJECT MATTER |
|---|
| *H04B 10/27*(2013.01)i<br>FI: H04B10/27 |
| According to International Patent Classification (IPC) or to both national classification and IPC |

| B. FIELDS SEARCHED |
|---|
| Minimum documentation searched (classification system followed by classification symbols)<br>H04B10/27 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2001-45042 A (MATSUSHITA ELECTRIC INDUSTRIAL CO., LTD.) 16 February 2001 (2001-02-16)<br>paragraphs [0102]-[0108], [0165]-[0175], [0189]-[0191], fig. 1 | 4-7 |
| A | | 1-3 |
| A | JP 2003-324393 A (MATSUSHITA ELECTRIC INDUSTRIAL CO., LTD.) 14 November 2003 (2003-11-14)<br>entire text, all drawings | 1-7 |
| A | JP 2011-172133 A (NIPPON TELEGRAPH AND TELEPHONE CORPORATION) 01 September 2011 (2011-09-01)<br>entire text, all drawings | 1-7 |
| A | JP 2004-56617 A (MITSUBISHI ELECTRIC CORPORATION) 19 February 2004 (2004-02-19)<br>entire text, all drawings | 1-7 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>**18 April 2022** | Date of mailing of the international search report<br>**26 April 2022** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

## INTERNATIONAL SEARCH REPORT

International application No.

**PCT/JP2022/004242**

| C. | DOCUMENTS CONSIDERED TO BE RELEVANT | |
|---|---|---|
| Category* | Citation of document, with indication, where appropriate, of the relevant passages | Relevant to claim No. |
| A | KIM, E. S. et al. Coverage Extension of Indoor 5G Network Using RoF-Based Distributed Antenna System,. IEEE Access. 2020, vol. 8, pp. 194992-194999<br>entire text, all drawings | 1-7 |

Form PCT/ISA/210 (second sheet) (January 2015)

**INTERNATIONAL SEARCH REPORT**
Information on patent family members

International application No.

**PCT/JP2022/004242**

| Patent document cited in search report | | | Publication date (day/month/year) | Patent family member(s) | | | Publication date (day/month/year) |
|---|---|---|---|---|---|---|---|
| JP | 2001-45042 | A | 16 February 2001 | (Family: none) | | | |
| JP | 2003-324393 | A | 14 November 2003 | US entire text, all drawings EP CN | 2003/0161637 1339179 1447539 | A1 A2 A | |
| JP | 2011-172133 | A | 01 September 2011 | (Family: none) | | | |
| JP | 2004-56617 | A | 19 February 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOTA ITO** ; **MIZUKI SUGA** ; **YUSHI SHIRATO** ; **NAOKI KITA** ; **TAKESHI ONIZAWA**. Efficiently Accommodating High-frequency-band Wireless Systems by Using Analog Radio-over-fiber. *NTT Technology Journal*, 2020, vol. 32 (3), 15-17

- **E.-S. KIM** ; **M. SUNG** ; **J. H. LEE** ; **J. K. LEE** ; **S.-H. CHO** ; **J. KIM**. Coverage Extension of Indoor 5G Network Using RoF-Based Distributed Antenna System. *IEEE Access*, 2020, vol. 8, 194992-194999